# EUROPEAN PATENT APPLICATION

(11) **EP 2 481 679 A1**
(43) Date of publication of application: **01.08.2012**
(21) Application number: 10842819.4
(22) Date of filing: 12.01.2010
(51) Int. Cl.: B65D 41/00, C08L 67/03, C08J 11/00

(54) **PET BOTTLE LID AND MANUFACTURING METHOD THEREOF**

(71) Applicant: Tsai, Chwei-Jei, Taichung City 407 (TW)
(72) Inventor: Tsai, Chwei-Jei, Taichung City 407 (TW)
(74) Representative: Lang, Christian
(86) International application number: PCT/CN2010/070098
(87) International publication number: WO 2011/085535

(57) **Abstract**

The present invention provides a manufacturing method of a PET bottle lid. The method includes a melting and blending step, comprising preparing a slurry substantially consisting of polyethylene terephthalate raw material, plasticizer and nano clay; and an injection molding step to mold the lid. Thereby, the lid has enhanced mechanical properties to facilitate follow-up mechanical process. Due to the composition of the lid being highly similar to that of the bottle, the difficulty of recycling PET bottle can be significantly reduced and the cost thereof can also be lowered.

## Description

### Field of the Invention

The present invention relates to a PET bottle lid and a manufacturing method thereof.

### Description of the Prior Art

The polyethylene terephthalate (hereinafter PET) bottle is a common beverage container. The cap of the PET bottle is mostly made from HDPE (high density polyethylene) or PP (poly propylene) rather than PET itself.

It is because that PET is too hard to be molded in a manner of injection molding process. For example, the molding process lasts too long that it would become inefficient, the hardness of PET is so high that the PET cannot be easily mechanically processed, and the failure ratio thereof is also too high. As a result, caps made from PET are rarely seen in the market.

However, a PET bottle using an HDPE or PP cap may lead to recycling disadvantages. That is, a mechanical belt of the HDPE or PP cap is left on the PET bottle even when the cap itself is removed. It is to be noted that a bottle made from PET and a mechanical belt made from HDPE or PP cannot be recycled at a same process. As a result, the mechanical belt should be removed from the PET bottle before further processing the PET bottle.

A conventional removal manner includes manually removing the mechanical belt with pliers. Such manner requires lots of human power that the labor cost would be too high. Another removal manner includes shattering and breaking the bottle and the mechanical belt into pieces, and placing such pieces in water to separate the components by specific gravity differences. However, the separated PET pieces should be dried before further processing so that the energy cost would be increased significantly.

### SUMMARY OF THE INVENTION

The main object of the present invention is to provide a lid that can facilitate the PET bottle recycle process.

Another main object of the present invention is to provide a lid that can be mechanically manufactured more easily.

To achieve the above and other objects, a manufacturing method of a PET bottle lid includes:
a melting and blending step, including preparing a slurry substantially consisting of PET raw material, plasticizer and nano clay; and
an injection molding step, including injecting the slurry into a mold to mold the lid.

To achieve the above and other objects, a lid adapted for a PET bottle of the present invention substantially consists of PET raw material, plasticizer and nano clay.

The present invention will become more obvious from the following description when taken in connection with the accompanying drawings, which show, for purpose of illustrations only, the preferred embodiment(s) in accordance with the present invention.

### BRIEF DESCRIPTION OF THE DRAWINGS

Fig. 1 is a flow chart showing a manufacturing method of a lid of the present invention;
Fig. 2 is a front view showing a lid of the present invention;
Fig. 3 is a profile of Fig. 2;
Fig. 4 is a profile showing a lid after a bending step of the present invention;
Fig. 5 is a perspective view showing a lid after a perforating step of the present invention;
Fig. 6 is a profile of Fig. 5;
Fig. 7 is a perspective view showing a lid of the present invention installed on a bottle;
Fig. 8 is a profile of Fig. 7.

### DETAILED DESCRIPTION OF THE PREFERRED EMBODIMENTS

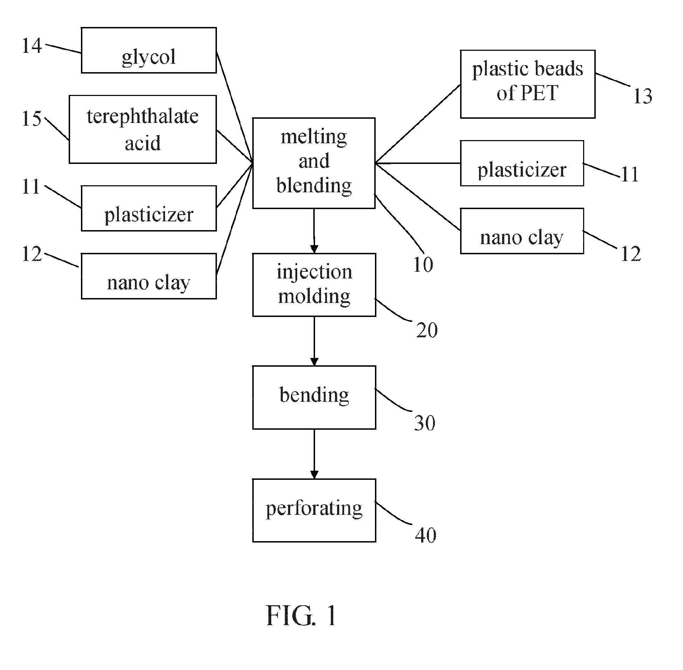

Please refer to Fig. 1 first. The present invention provides a manufacturing method of a PET bottle lid, which includes a melting and blending step 10, a injection molding step 20, a bending step 30 and a perforating step 40.

The melting and blending step 10 mainly includes preparing a slurry which substantially consists of PET raw material, plasticizer 11 and nano clay 12. More specifically, the slurry may be prepared by mixing plastic beads 13 of PET with plasticizer 11 and nano clay 12 in a kneader such as a twin-screw kneader. Or, the slurry may be prepared by mixing and kneading glycol 14 and terephthalate acid 15 with plasticizer 11 and nano clay 12. As the slurry is obtained, the slurry can be immediately used in the injection molding process 20 or the slurry may be formed into beads for storage and transportation purposes. The reformed PET beads can be melted again and undergo the injection molding process 20. The addition of the plasticizer can make the PET easily molded. The nano clay 12 is obtained by, for example, delaminated montmorillonite, and the nano clay 12 is proven non-toxic so that it can be added into lids enveloping beverage. Further, the addition of the nano clay 12 enables the PET lid to have good impact resistance, fatigue resistance and air tightness. This makes the lids suitable for beer containers, and the PET bottles are thus likely to replace aluminum cans and glass bottles as the beer containers.

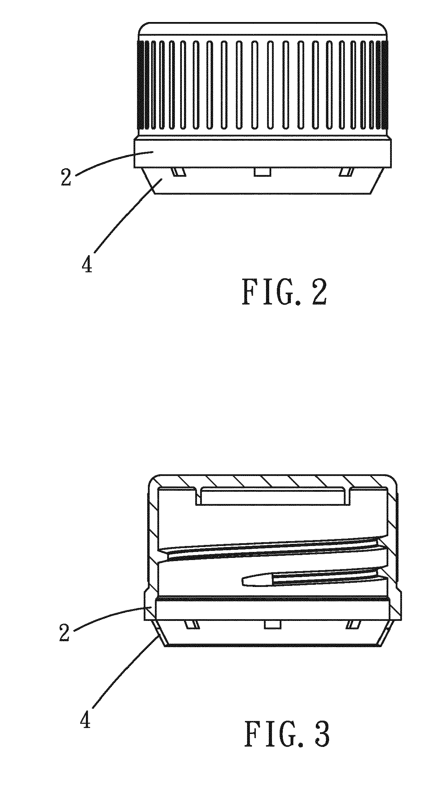

The injection molding step 20 includes injecting the slurry into a mold to mold the lid. Please refer to Figs. 2 and 3. In the step 20 of injection molding, an annular mechanical belt 2 is simultaneously molded and axially extends from a bottom rim of the lid, and a flexer 4 is also simultaneously molded and extends from a bottom of the mechanical belt 2.

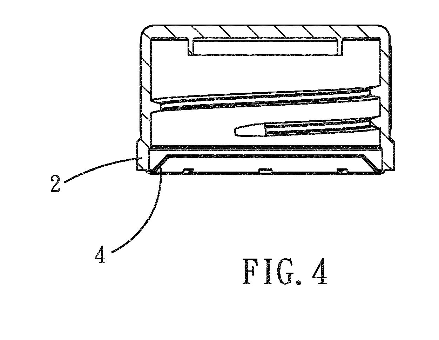

The bending step 30 includes bending the flexer 4 toward a center of the lid to form an annular hook, as shown in Fig. 4, after the lid is threaded on a PET bottle.

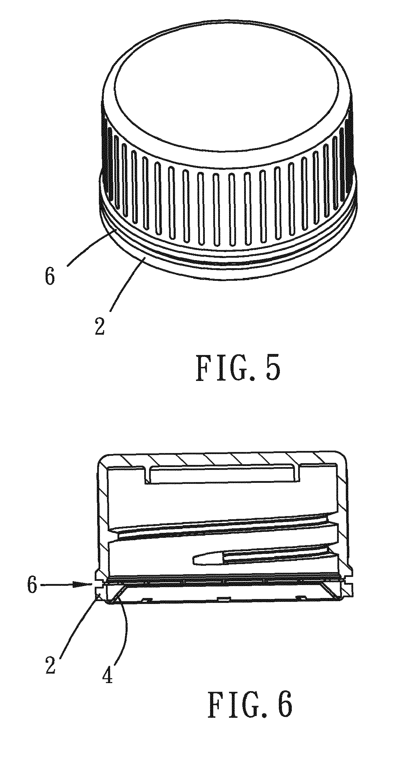

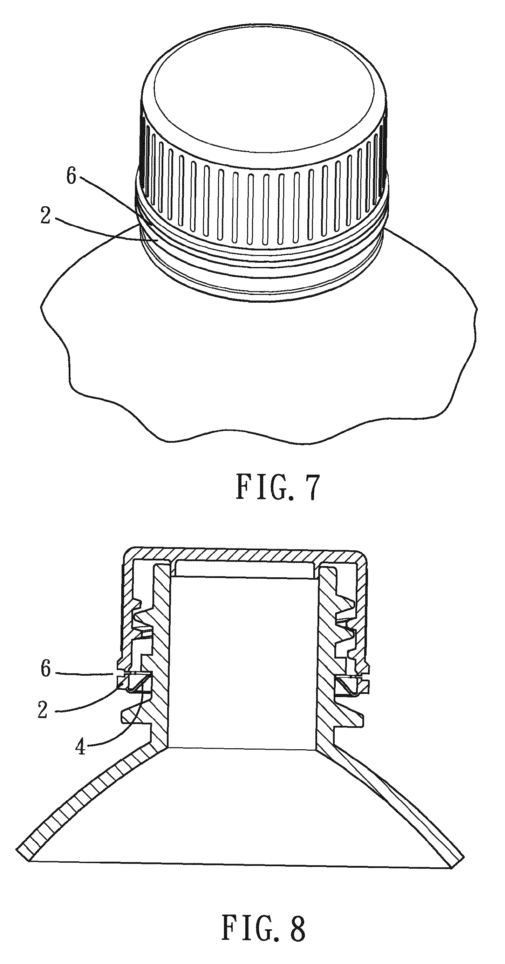

The perforating step 40 includes perforating several annular disconnected lines 6 between the mechanical belt 2 and the bottom rim of the lid, as shown in Figs. 5 and 6. Thereby, the flexer 4 abuts against the bottle neck, as shown in Figs. 7 and 8, so that the mechanical belt 2 can be separated from the bottom rim of the lid as the user turns the lid open.

In the method of the present invention, a gasket may be disposed in the lid and locate between the lid and the bottle neck so as to further enhance the air tightness of the PET bottle. Preferably, the gasket is also made from PET material mixed with plasticizer and nano clay.

Due to the addition of plasticizer and nano clay, the mechanical process of the PET material can be facilitated, and the difficult of recycling PET bottle using the lid of the present invention can be significantly reduced and the cost thereof can also be lowered due to the lid and the bottle are both made from substantially the same material. Further, the addition of nano clay also enables the PET material to have better fiber strength so that it is less likely to break during the stretching treatment of a recycling system.

## Claims

1. A manufacturing method of a PET bottle lid, comprising:
a melting and blending step (10), comprising preparing a slurry substantially consisting of polyethylene terephthalate raw material, plasticizer (11) and nano clay (12); and
an injection molding step (20), comprising injecting the slurry into a mold to mold the PET bottle lid.

2. The method of claim 1, wherein the melting and blending step (10) comprises mixing plastic beads (13) of polyethylene terephthalate with plasticizer (11) and nano clay (12) in a kneader to prepare the slurry.

3. The method of claim 1, wherein the melting and blending step (10) comprises mixing and kneading glycol (14) and terephthalate acid (15) with plasticizer (11) and nano clay (12) to prepare the slurry.

4. The method of claim 1, wherein in the step of injection molding (20), an annular mechanical belt (2) is simultaneously molded and axially extends from a bottom rim of the PET bottle lid, a flexer (4) is also simultaneously annularly molded and extends from a bottom of the mechanical belt (2).

5. The method of claim 4, further comprising:
a bending step (30), comprising bending the flexer (4) toward a center of the PET bottle lid to form an annular hook; and
a perforating step (40), comprising perforating several annular disconnected lines (6) between the mechanical belt (2) and the bottom rim of the PET bottle lid.

6. A PET bottle lid, substantially consisting of polyethylene terephthalate raw material, plasticizer (11) and nano clay (12).

7. The PET bottle lid of claim 6, wherein the PET bottle lid has a bottom rim, a mechanical belt (2) is extended from the bottom rim of the PET bottle lid, and a flexer (4) is extended from a bottom of the mechanical belt (2).

8. The PET bottle lid of claim 7, wherein the flexer (4) is bent toward a center of the PET bottle lid to form an annular hook, several annular disconnected lines (6) are perforated between the mechanical belt (2) and the bottom rim of the PET bottle lid.
